# EUROPEAN PATENT APPLICATION

(11) **EP 2 075 853 A2**
(43) Date of publication of application: **01.07.2009**
(21) Application number: 08171262.2
(22) Date of filing: 10.12.2008
(51) Int. Cl.: H01L 31/052, H01L 31/042

(54) **Photovoltaic system with high energy yield**

(30) Priority: 28.12.2007 IT BO20070852
(71) Applicant: SUNERG SOLAR S.R.L., 06012 Citta' di Castello, Cinquemi (PG) (IT)
(72) Inventor: Lauri, Luciano, 06012, CITTA' DI CASTELLO PG (IT)
(74) Representative: Modiano, Micaela Nadia

(57) **Abstract**

A photovoltaic system (1) with high energy yield, comprising at least two photovoltaic modules (2a, 2b) which are inclined with respect to the installation surface (3), for receiving sunlight and converting it into electric power by photoelectric effect, are substantially aligned in a column and are mutually spaced so as to delimit a predefined gap (4). The photovoltaic system (1) comprises at least one reflective device (5), adapted to reflect sunlight, which is arranged at the gap (4), to the rear of the front photovoltaic module (2a), and is oppositely inclined with respect to it in order to cause an increase in the sunlight that is incident on the rear module (2b).

## Description

The present invention relates to a photovoltaic system with high energy yield.

Currently, the problem of energy is felt more than ever, and in particular all the countries of the world are investing in research in order to develop the exploitation of renewable energy sources, the waste products of which do not have additional disposal problems.

Among renewable energies, one of the most widespread and easily usable is solar energy, which can be used for example to heat a fluid that flows within solar panels, or to generate electric power by photovoltaic effect.

As is known, the photovoltaic effect occurs whenever a photon with sufficient energy strikes a semiconductor material, for example crystalline or amorphous silicon; in this case, in fact, a pair of electric charges becomes available to conduct electricity and therefore electric current is generated by doping the semiconductor material in order to obtain the desired potential difference, more specifically by placing in contact two layers of the semiconductor material, doped with two suitable types of impurity, such as for example boron and phosphorus. The photovoltaic solar module, exposed to the sun, can thus deliver electric power, to be used directly or to be fed to the grid.

These are in any case systems that entail rather high installation costs, and this has led many companies to experiment with solutions for increasing the energy yield of photovoltaic modules; among the most widespread, there is the installation of sun-following systems, which allow a 10-35% yield improvement, by using motor drives with one or two axes for the modules, in order to ensure that they can follow the sun in its daily motion; the result is certainly excellent in terms of resulting efficiency, in contrast however with higher purchase and installation costs.

A second solution instead provides for the installation of mirrors or reflective surfaces, again on followers or fixed surfaces, in order to increase the solar energy that is incident on the solar module: the increase can be 5-30%, depending on the type of installation.

One drawback linked to this last constructive solution is constituted by the need to provide a larger surface for installation, indeed in order to be able to reserve part of this surface for the mirrors, which are usually installed laterally.

Further, the mirrors in turn require adequate supporting structures, thus being detrimental to the desired structural simplicity of the installation.

The aim of the present invention is to solve the above-mentioned drawbacks, by providing a photovoltaic system that ensures a high energy yield without requiring the occupation of additional areas for installing mirrors or reflective surfaces.

Within this aim, an object of the invention is to provide a photovoltaic system that has adequate structural simplicity despite being provided with mirrors or reflective surfaces.

Another object of the invention is to provide a photovoltaic system that is suitable for installation both on fixed structures and on structures that are preset to follow the sun.

Another object of the invention is to provide a photovoltaic system that ensures high reliability in operation.

Another object of the invention is to provide a photovoltaic system that can be obtained easily starting from commonly commercially available elements and materials.

Another object of the invention is to provide a photovoltaic system that has low costs.

This aim and these and other objects, which will become better apparent hereinafter, are achieved by a photovoltaic system with high energy yield, comprising at least two photovoltaic modules which are inclined with respect to the installation surface, for receiving sunlight and converting it into electric power by photoelectric effect, are substantially aligned in a column, and are mutually spaced so as to delimit a predefined gap, characterized in that it comprises at least one reflective device, adapted to reflect sunlight, which is arranged at said gap, to the rear of the front photovoltaic module, and is oppositely inclined with respect to it in order to cause an increase in the sunlight that is incident on the rear module.

Further characteristics and advantages of the invention will become better apparent from the following detailed description of two preferred but not exclusive embodiments of the photovoltaic system according to the invention, illustrated by way of non-limiting example in the accompanying drawings, wherein:
Figure 1 is a schematic view of the photovoltaic system according to the invention, in its first embodiment;
Figure 2 is a schematic view of the photovoltaic system according to the invention, in its second embodiment.

With reference to the figures, a photovoltaic system according to the invention, generally designated by the reference numeral 1, comprises at least two photovoltaic modules 2a, 2b, which are inclined with respect to an installation surface 3 in order to receive sunlight and are adapted to convert it into electric power by photoelectric effect, in order to be able to then use it directly or transfer it to the power supply grid.

As will become better apparent from what will be described in the paragraphs that follow, for the photovoltaic system 1 according to the invention, the choice of the type of photovoltaic module 2a, 2b does not affect in any way the invention. The photovoltaic module 2a, 2b can therefore be made of mono- or polycrystalline silicon or other suitable semiconducting material, or can comprise a thin film, for example of amorphous silicon, if the requirement of deformability of the module 2a, 2b is set.

The photovoltaic modules 2a, 2b are arranged in a column and mutually spaced so as to delimit a predefined gap 4, in addition to being inclined with respect to the ground, at an angle that allows to obtain the maximum incidence of sunlight and therefore the maximum utilization of its energy to generate electric power.

Such angle is preferably comprised within a range between 5° and 45°.

According to the invention, the photovoltaic system 1 comprises at least one reflective device 5, which is capable of reflecting sunlight and is arranged at the gap 4 to the rear of the front photovoltaic module 2a and is inclined oppositely with respect to it, in order to produce, on the rear module 2b, an increase in incident sunlight.

In particular, the photovoltaic system 1 according to the invention comprises a plurality of photovoltaic modules 2a, 2b, which are arranged, as a function of the space available and of the inclination to be assumed to achieve the maximum energy yield, along at least two mutually substantially parallel rows which are spaced according to the predefined gaps 4. The photovoltaic system 1 thus comprises a plurality of reflective devices 5, which are arranged at the gaps 4 to the rear of the row of front modules 2a and are inclined toward the row of rear modules 2b in order to cause thereon an increase in incident sunlight.

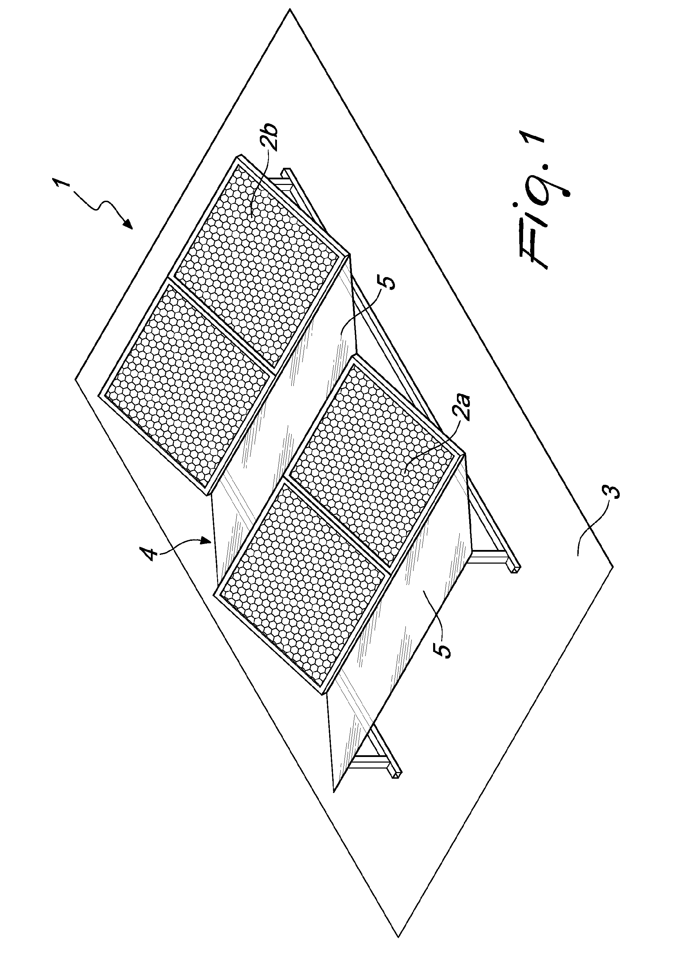

It is of course possible to provide the photovoltaic system 1 also with a series of reflective devices 5 that is arranged in front of the row of front modules 2a, in order to cause on this row as well an increase in incident sunlight, as provided in the system 1 shown in Figure 1.

Each reflective device 5 comprises a surface plate, which is capable of reflecting sunlight and can be jointly connected to the installation surface 3, as shown in Figure 1.

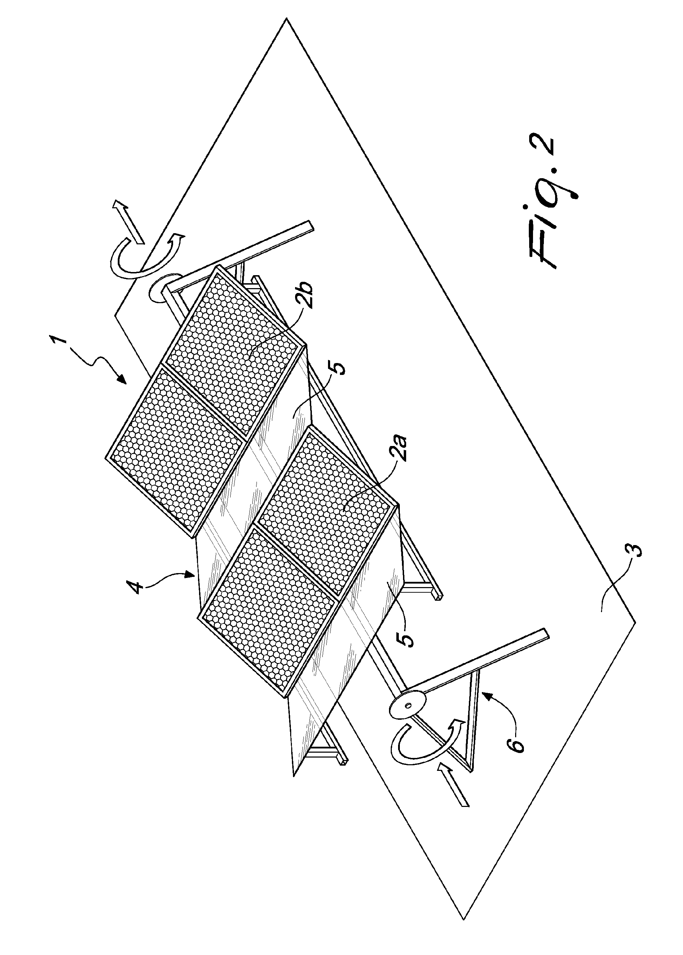

Conveniently, according to a second embodiment of particular practical interest, which however does not limit the application of the invention, the surface plate is connected to movement means 6, as shown in Figure 2, which can be actuated on command in order to vary their spatial orientation, so as to follow the sun during its daily motion and thus ensure maximum yield of the system 1 throughout the day.

Whether fixed or connected to movement means 6, the surface plate, which reflects at least part of the sunlight toward the subsequent photovoltaic module 2a, 2b in order to increase its energy yield, has a substantially flat shape which is inclined at such an angle as to ensure that the fraction of reflected solar energy that is incident to the subsequent photovoltaic module 2a, 2b is the highest possible.

As an alternative, the surface plate has a curved profile, for example a parabolic one, in order to better convey the sunlight onto the photovoltaic modules 2a, 2b, thus achieving higher efficiency. Resorting to a quadric configuration for the surface plate in fact offers the possibility of an advantageous embodiment, in which the overall energy yield is higher than in the previously described solution.

Advantageously, each reflective device 5 can constitute the support for the respective front photovoltaic module 2a, be connected thereto or in any case be an integral part thereof, thus ensuring that the photovoltaic system 1 according to the invention has the desired structural simplicity in addition to ensuring that it has other advantageous characteristics, such as easy installation and maintenance.

The operation of the photovoltaic system according to the invention is as follows.

As noted, the possibility to use mirrors or other reflective surfaces to increase the solar energy that is incident on the modules 2a, 2b allows an increase in the performance of the system 1 as a whole; in this case, all this is achieved without requiring the occupation of additional space for the reflective devices 5, which are conveniently arranged in the free spaces between a front photovoltaic module 2a and a rear photovoltaic module 2b, or between two successive rows of modules 2a, 2b.

The energy yield of the photovoltaic system 1 according to the invention can then be optimized by way of the means 6 for moving the surface plate of the reflective devices 5 and can be further increased by providing the photovoltaic modules 2a, 2b also with following systems, which can have one or two axes.

In practice it has been found that the photovoltaic system according to the invention fully achieves the proposed aim and objects, since the arrangement of the reflective devices 5 between a front photovoltaic module 2a and a rear photovoltaic module 2b allows an advantageous increase in the energy yield of the photovoltaic system 1 according to the invention without compromising its structural simplicity and without requiring the occupation of additional surfaces for installation.

The invention thus conceived is susceptible of numerous modifications and variations, all of which are within the scope of the appended claims; all the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

The disclosures in Italian Patent Application No. BO2007A000852 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A photovoltaic system (1) with high energy yield, comprising at least two photovoltaic modules (2a, 2b) which are inclined with respect to the installation surface (3), for receiving sunlight and converting it into electric power by photoelectric effect, are substantially aligned in a column, and are mutually spaced so as to delimit a predefined gap (4), **characterized in that** it comprises at least one reflective device (5), adapted to reflect sunlight, which is arranged at said gap (4), to the rear of the front photovoltaic module (2a), and is oppositely inclined with respect to it in order to cause an increase in the sunlight that is incident on the rear module (2b).

2. The photovoltaic system according to claim 1, **characterized in that** it comprises a plurality of said photovoltaic modules (2a, 2b), arranged on at least two rows which are mutually substantially parallel and are spaced according to said gaps (4), said photovoltaic system (1) comprising a plurality of said reflective devices (5), which are arranged at said gaps (4), to the rear of the row of said front photovoltaic modules (2a), in order to increase the sunlight that is incident on the row of said rear modules (2b).

3. The photovoltaic system according to claims 1 and 2, **characterized in that** each one of said reflective devices (5) comprises a surface plate that reflect sunlight and can be fixed to the installation surface (3).

4. The photovoltaic system according to claims 1 and 2, **characterized in that** each one of said reflective devices (5) comprises a surface plate that reflects sunlight and is connected to movement means (6) that can be actuated on command in order to vary the spatial orientation of said surface plate in order to follow the motion of the sun.

5. The photovoltaic system according to one or more of the preceding claims, **characterized in that** said surface plate is substantially flat.

6. The photovoltaic system according to one or more of claims 1 to 4, **characterized in that** said surface plate has a substantially curved profile.

7. The photovoltaic system according to claim 6, **characterized in that** at least one portion of said profile of said surface plate is substantially parabolic.

8. The photovoltaic system according to one or more of the preceding claims, **characterized in that** each one of said reflective devices (5) constitutes a support for the respective front photovoltaic module (2a).
